(19) Europäisches Patentamt
European Patent Office
Office européen des brevets

(11) **EP 4 561 222 A1**

(12) **EUROPEAN PATENT APPLICATION**
published in accordance with Art. 153(4) EPC

(43) Date of publication:
**28.05.2025 Bulletin 2025/22**

(21) Application number: **23842438.6**

(22) Date of filing: **21.07.2023**

(51) International Patent Classification (IPC):
**H04W 72/04** *(2023.01)*    **H04W 72/232** *(2023.01)*

(52) Cooperative Patent Classification (CPC):
**H04L 5/00; H04W 72/04; H04W 72/12;**
**H04W 72/232**

(86) International application number:
**PCT/CN2023/108698**

(87) International publication number:
**WO 2024/017376 (25.01.2024 Gazette 2024/04)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **22.07.2022 CN 202210868407**

(71) Applicant: **Beijing Unisoc Communications**
**Technology**
**Co., Ltd**
**Beijing 100083 (CN)**

(72) Inventor: **ZHOU, Huan**
**Beijing 100083 (CN)**

(74) Representative: **Mewburn Ellis LLP**
**Aurora Building**
**Counterslip**
**Bristol BS1 6BX (GB)**

(54) **SCHEDULING INFORMATION INDICATION METHOD AND COMMUNICATION APPARATUS**

(57)    A method for indicating scheduling information and a communication device are provided, involving the field of communication technology. The method includes: receiving downlink control information, the downlink control information is used to schedule multiple cells, the downlink control information includes a first field and/or a second field; determining the scheduling information of each cell among the multiple cells based on the first field and/or the second field. By adopting the disclosure, the scheduling information of co-scheduled cells can be accurately indicated, the bit overhead of downlink control signaling can be reduced, and it is conducive to improving the reliability and flexibility of PDCCH transmission.

FIG. 2

**Description**

CROSS-REFERENCE TO RELATED APPLICATION(S)

This application claims the priority of Chinese patent application No. 202210868407.0 filed with the China Patent Office on July 22, 2022, and titled "METHOD FOR INDICATING SCHEDULING INFORMATION AND COMMUNICATION DEVICE". The entire content of that application is incorporated by reference herein.

TECHNICAL FIELD

This application relates to the field of communication technology, particularly to a method for indicating scheduling information and a communication device.

BACKGROUND

In the carrier aggregation (CA) scenario, a base station can configure several cells for a user equipment (UE), with one cell serving as the primary cell (PCell) for the UE and the remaining cells as secondary cells (SCells). The base station can schedule the UE for transmission across multiple cells through scheduling signaling, for example, by using a downlink control information (DCI) to schedule the UE for reception or transmission across multiple cells, i.e., one DCI is used to schedule multiple cells. This scheduling method can be referred to as multi-cell scheduling or multi-carrier scheduling. The cells scheduled by the scheduling signal can be called co-scheduled cells or scheduled cells.
In the multi-cell scheduling method, how the DCI indicates the scheduling information of the co-scheduled cells is a technical problem that needs to be solved.

SUMMARY

The embodiments of this application provide a method for indicating scheduling information and a communication device, which can accurately indicate the scheduling information of co-scheduled cells in a multi-cell scheduling method, reduce the bit overhead of downlink control information, and are conducive to improving the reliability and flexibility of physical downlink control channel (PDCCH) transmission.
In the first aspect, a method for indicating scheduling information is provided, which includes: receiving downlink control information (DCI), the DCI is used to schedule multiple cells, and the DCI includes a first field and/or a second field; determining the scheduling information of each cell among the multiple cells based on the first field and/or the second field; where the length and/or the value of the first field are used to determine the scheduling information of each cell among the multiple cells; or the first field and preset information are used to determine the scheduling information of each cell among the multiple cells; or the first field is used to indicate the scheduling information of a first cell, and the first cell belongs to the multiple cells; the second field includes multiple concatenated bit units, a single bit-unit is used to indicate the scheduling information of the cell corresponding to the bit unit, and the cell corresponding to the bit unit belongs to the multiple cells; or the second field includes multiple concatenated bit units, a single bit-unit is used to indicate the scheduling information of a cell subgroup corresponding to the bit unit, and the cell subgroup corresponding to the bit unit belongs to the multiple cells. It can be seen that in the multi-cell scheduling method, the scheduling information of each cell can be determined based on different indication methods of the first field and/or the second field, which can reduce the bit overhead of downlink control information and is conducive to improving the reliability and flexibility of PDCCH transmission.
In one possible implementation, the length of the first field is related to the configuration information of a reference cell. Determining the scheduling information of each cell among the multiple cells based on the first field may include: determining the scheduling information of a second cell based on the length of the first field and the bit length required by the configuration parameters of the second cell, the second cell is any one of the multiple cells. It can be seen that the scheduling information of each cell can be accurately determined based on the length of the first field and the bit length required by the configuration parameters of each cell.
In one possible implementation, determining the scheduling information of the second cell based on the length of the first field and the bit length required by the configuration parameters of the second cell may include: if the length of the first field is greater than the bit length required by the configuration parameters of the second cell, performing a high-bit puncturing process on the first field, and determining the scheduling information of the second cell based on the processed first field. It can be seen that by comparing the length of the first field with the bit length required by the configuration parameters of each cell, the scheduling information of each cell can be flexibly determined.
In one possible implementation, determining the scheduling information of the second cell based on the length of the first field and the bit length required by the configuration parameters of the second cell may include: if the length of the first field is less than the bit length required by the configuration parameters of the second cell, performing a high-bit zero padding process on the first field, and determining the scheduling information of the second cell based on the processed first field; or, if the length of the first field is less than the bit length required by the configuration parameters of the second cell, processing the first field based on the ratio of the bit length required by the configuration parameters of the second cell to the length of the first field, and determining the scheduling information of the second cell based on the processed first field; or, if the length of the first field is less than the bit length required by the configuration parameters of the second cell, determining the scheduling information of the second cell as a subset of the reference scheduling information of the second cell, the reference scheduling information of the second cell corresponding to single-cell scheduling. It can be seen that if the length of the first field is less than the bit length required by the configuration parameters of the cell, different methods can be chosen to determine the scheduling information of the cell.

In one possible implementation, the length of the first field is configured by a first higher layer signaling or predefined by a protocol, and the value of the first field is used to determine the scheduling information of each cell among the multiple cells.

In one possible implementation, the length of the first field is configured by a first higher layer signaling or predefined by a protocol, and the value of the first field and preset information are used to determine the scheduling information of each cell among the multiple cells.

In one possible implementation, determining the scheduling information of the second cell based on the length of the first field and the bit length required by the configuration parameters of the second cell may include: the value of the first field indicating the index value of each cell among the multiple cells; determining the scheduling information of each cell among the multiple cells based on the index value of each cell and the configuration information of each cell among the multiple cells. It can be seen that the value of the first field can indicate the index values of different cells, which facilitates more accurate determination of the scheduling information of each cell based on the index value and configuration information of each cell.

In one possible implementation, the second field includes multiple concatenated bit units, a single bit-unit is used to indicate the scheduling information of the cell corresponding to the bit unit; the position of the bit unit corresponding to a third cell in the second field is fixed or variable; the third cell is any one of the multiple cells. It can be seen that a single bit-unit in the second field can be used to indicate the scheduling information of the cell corresponding to the bit unit, which facilitates distinguishing the scheduling information of different cells.

In one possible implementation, the position of the bit unit corresponding to the third cell in the second field is the same as the position of the third cell among the multiple cells, and the position of the third cell among the multiple cells is configured by a second higher layer signaling.

In one possible implementation, the second field includes multiple concatenated bit units, a single bit-unit is used to indicate the scheduling information of a cell subgroup corresponding to the bit unit, the position of the bit unit corresponding to a first cell subgroup in the second field is fixed or variable; the first cell subgroup is any one of the multiple cell subgroups corresponding to the multiple cells. It can be seen that a single bit-unit in the second field can be used to indicate the scheduling information of the cell subgroup corresponding to the bit unit, which facilitates distinguishing the scheduling information of different cell subgroups and can also save signaling overhead.

In one possible implementation, the position of the bit unit corresponding to the first cell subgroup in the second field is related to the number of the first cell subgroup, and the number of the first cell subgroup is configured by a third higher layer signaling.

In one possible implementation, the method further includes: receiving a third higher layer signaling, the third higher layer signaling configures multiple cell subgroups for multi-cell scheduling, and the third higher layer signaling includes the serial number of each cell subgroup among the multiple cell subgroups. It can be seen that the serial number of each cell subgroup can be determined through the third higher layer signaling.

In the second aspect, another method for indicating scheduling information is provided, which includes: sending downlink control information, the downlink control information being used to schedule multiple cells, and the downlink control information including a first field and/or a second field; where the length and/or the value of the first field are used to determine the scheduling information of each cell among the multiple cells; or the first field and preset information are used to determine the scheduling information of each cell among the multiple cells; or the first field is used to indicate the scheduling information of a first cell, and the first cell belongs to the multiple cells; the second field includes multiple concatenated bit units, a single bit-unit is used to indicate the scheduling information of the cell corresponding to the bit unit, and the cell corresponding to the bit unit belongs to the multiple cells; or the second field includes multiple concatenated bit units, a single bit-unit is used to indicate the scheduling information of a cell subgroup corresponding to the bit unit, and the cell subgroup corresponding to the bit unit belongs to the multiple cells. It can be seen that in the multi-cell scheduling method, multiple cells can be scheduled through different indication methods of the first field and/or the second field, which can reduce the bit overhead of downlink control information and is conducive to improving the reliability and flexibility of PDCCH transmission.

In one possible implementation, the length of the first field is related to the configuration information of a reference cell. It can be seen that the length of the first field can be obtained based on the configuration of the reference cell, which facilitates the terminal device to determine the scheduling information of each cell based on the length of the first field.

In one possible implementation, the length of the first field is configured by a first higher layer signaling or predefined by a protocol, and the value of the first field is used to determine the scheduling information of each cell among the multiple cells.

In one possible implementation, the length of the first field is configured by a first higher layer signaling or predefined by a protocol, and the value of the first field and preset information are used to determine the scheduling information of each cell among the multiple cells.

In one possible implementation, the second field includes multiple concatenated bit units, a single bit-unit is used to indicate the scheduling information of the cell corresponding to the bit unit; the position of the bit unit corresponding to a third cell in the second field is fixed or variable; the third cell is any one of the multiple cells. It can be seen that a single bit-unit in the second field can be used to indicate the scheduling information of the cell corresponding to the bit unit, which facilitates distinguishing the scheduling information of different cells.

In one possible implementation, the position of the bit unit corresponding to the third cell in the second field is the same as the position of the third cell among the multiple cells, and the position of the third cell among the multiple cells is configured by a second higher layer signaling.

In one possible implementation, the second field includes multiple concatenated bit units, a single bit-unit is used to indicate the scheduling information of a cell subgroup corresponding to the bit unit, the position of the bit unit corresponding to a first cell subgroup in the second field is fixed or variable; the first cell subgroup is any one of the multiple cell subgroups corresponding to the multiple cells. It can be seen that a single bit-unit in the second field can be used to indicate the scheduling information of the cell subgroup corresponding to the bit unit, which facilitates distinguishing the scheduling information of different cell subgroups and can also save signaling overhead.

In one possible implementation, the position of the bit unit corresponding to the first cell subgroup in the second field is related to the serial number of the first cell subgroup, and the serial number of the first cell subgroup is configured by a third higher layer signaling.

In one possible implementation, the method further includes: sending a third higher layer signaling, the third higher layer signaling configures multiple cell subgroups for multi-cell scheduling, and the third higher layer signaling includes the serial number of each cell subgroup among the multiple cell subgroups. It can be seen that the serial number of each cell subgroup can be determined through the third higher layer signaling.

In the third aspect, a communication device is provided, which includes a communication unit and a processing unit, where the communication unit is configured to receive downlink control information, the downlink control information being used to schedule multiple cells, and the downlink control information includes a first field and/or a second field; the processing unit is configured to determine the scheduling information of each cell among the multiple cells based on the first field and/or the second field; where the length and/or the value of the first field are used to determine the scheduling information of each cell among the multiple cells; or the first field and preset information are used to determine the scheduling information of each cell among the multiple cells; or the first field is used to indicate the scheduling information of a first cell, and the first cell belongs to the multiple cells; the second field includes multiple concatenated bit units, a single bit-unit is used to indicate the scheduling information of the cell corresponding to the bit unit, and the cell corresponding to the bit unit belongs to the multiple cells; or the second field includes multiple concatenated bit units, a single bit-unit is used to indicate the scheduling information of a cell subgroup corresponding to the bit unit, and the cell subgroup corresponding to the bit unit belongs to the multiple cells.

In the fourth aspect, another communication device is provided, which includes a communication unit, the communication unit is configured to send downlink control information, the downlink control information is used to schedule multiple cells, and the downlink control information includes a first field and/or a second field; where the length and/or the value of the first field are used to determine the scheduling information of each cell among the multiple cells; or the first field and preset information are used to determine the scheduling information of each cell among the multiple cells; or the first field is used to indicate the scheduling information of a first cell, and the multiple cells include the first cell; the second field includes multiple concatenated bit units, a single bit-unit is used to indicate the scheduling information of the cell corresponding to the bit unit, and the cell corresponding to the bit unit belongs to the multiple cells; or the second field includes multiple concatenated bit units, a single bit-unit is used to indicate the scheduling information of a cell subgroup corresponding to the bit unit, and the cell subgroup corresponding to the bit unit belongs to the multiple cells.

In the fifth aspect, a communication device is provided, which includes a processor, a memory, and a computer program or instruction stored on the memory, where the processor executes the computer program or instruction to implement the method according to the first aspect and any one of its possible implementations, or to implement the method according to the second aspect and any one of its possible implementations.

In the sixth aspect, a chip is provided. In one implementation, the chip is configured to receive downlink control information, the downlink control information is used to schedule multiple cells, and the downlink control information includes a first field and/or a second field; determining the scheduling information of each cell among the multiple cells based on the first field and/or the second field; where the length and/or the value of the first field are used to determine the scheduling information of each cell among the multiple cells; or the first field and preset information are used to determine the scheduling information of each cell among the multiple cells; or the first field is used to indicate the scheduling information of a first cell, and the multiple cells include the first cell; the second field includes multiple concatenated bit units, a single bit-unit is used to indicate the scheduling information of the cell corresponding to the bit unit, and the cell corresponding to the bit unit belongs to the multiple cells; or the second field includes multiple concatenated bit units, a single bit-unit is used to indicate the scheduling information of a cell subgroup corresponding to the bit unit, and the cell subgroup corresponding to the bit unit belongs to the multiple cells. In another implementation, the chip is configured to send downlink control information, the downlink control information is used to schedule multiple cells, and the downlink control information includes a first field and/or a second field; where the length and/or the value of the first field are used to determine the scheduling information of each cell among the multiple cells; or the first field and preset information are used to determine the scheduling information of each cell among the multiple cells; or the first field is used to indicate the scheduling information of a first cell, and the first cell belongs to the multiple cells; the second field includes multiple concatenated bit units, a single bit-unit is used to indicate the scheduling information of the cell corresponding to the bit unit, and the cell corresponding to the bit unit belongs to the multiple cells; or the second field includes multiple concatenated bit units, a single bit-unit is used to indicate the scheduling information of a cell subgroup corresponding to the bit unit, and the cell subgroup corresponding to the bit unit belongs to the multiple cells.

In the seventh aspect, a computer-readable storage medium is provided, which stores computer-readable instructions, and when the computer-readable instructions are executed, they implement the method according to the first aspect and any one of its possible implementations, or implement the method according to the second aspect and any one of its possible implementations.

In the eighth aspect, a computer program or computer program product is provided, which includes code or instructions, and when the code or instructions are executed on a computer, they cause the computer to execute the method according to the first aspect and any one of its possible implementations, or execute the method according to the second aspect and any one of its possible implementations.

In the ninth aspect, a chip module is provided, which includes a communication module, a power module, a storage module, and a chip, where: the power module is configured to provide power to the chip module; the storage module is configured to store data and instructions; the communication module is configured for internal communication of the chip module, or for communication between the chip module and external devices; the chip is configured to execute the method according to the first aspect and any one of its possible implementations, or execute the method according to the second aspect and any one of its possible implementations.

In the tenth aspect, a communication system is provided, which includes a communication device for executing the method according to the first aspect and any one of its possible implementations, and a communication device for executing the method according to the second aspect and any one of its possible implementations.

BRIEF DESCRIPTION OF THE DRAWINGS

Figure 1 is a system architecture diagram applying the embodiments of the disclosure.
Figure 2 is a flowchart of a method for indicating scheduling information provided by the embodiments of the disclosure.
Figure 3 is a structural diagram of a communication device provided by the embodiments of the disclosure.
Figure 4 is a structural diagram of another communication device provided by the embodiments of the disclosure.
Figure 5 is a structural diagram of a chip module provided by the embodiments of the disclosure.

DETAILED DESCRIPTION

In the disclosure, "first", "second", etc., are used to distinguish between items or similar items with basically the same function and role. Those skilled in the art can understand that "first", "second", etc., do not limit the quantity and execution order, and also do not necessarily mean they are different. "And/or" describes the relationship between associated objects, indicating that there can be three relationships, for example, A and/or B can indicate: A exists alone, A and B exist simultaneously, B exists alone. The character "/" generally indicates that the associated objects before and after are in an "or" relationship.

It should be understood that in the disclosure, "at least one" refers to one or more; "multiple" refers to two or more. In addition, "equal to" in the disclosure can be used with "greater than" or "less than". When "equal to" is used with "greater than", the technical solution of "greater than" is adopted; when "equal to" is used with "less than", the technical solution of "less than" is adopted.

Firstly, the system architecture involved in the disclosure is described.

The embodiments of the disclosure can be applied to the NR system, also known as the fifth generation (5th-generation, 5G) system; or it can also be applied to the sixth generation (6th-generation, 6G) system, or the seventh generation (7th-generation, 7G) system, or other future communication systems. Alternatively, the disclosure can also be applied to the long term evolution (LTE) system, and optionally, it can also be applied to the second generation (2nd-generation, 2G) or third generation (3rd-generation, 3G) system.

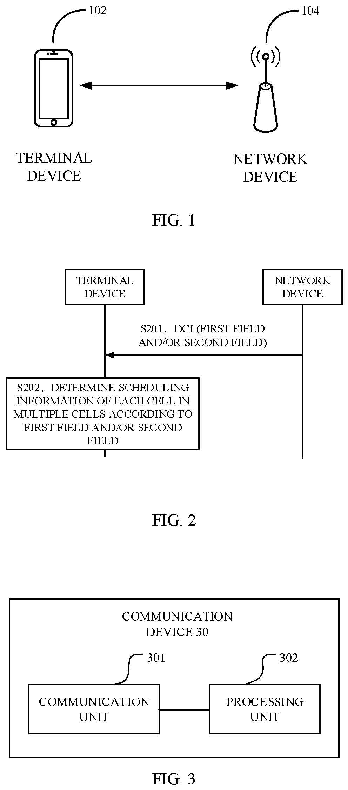

The disclosure can be applied to the system architecture shown in Figure 1. The communication system shown in Figure 1 may include terminal device 102 and network device 104. It should be noted that the number and form of the devices shown in Figure 1 are only for illustration and do not limit the embodiments of the disclosure. In actual applications, there can be a different number of terminal device and network device from those shown in Figure 1.

Terminal device 102 can be a device with wireless transmission and reception capabilities, also known as a terminal. Terminal device 102 can refer to various forms of user equipment (UE), mobile station (MS), mobile terminal (MT), access terminal device, vehicle terminal device, industrial control terminal device, UE unit, UE station, mobile station, remote station, remote terminal device, mobile device, UE terminal device, wireless communication equipment, UE agent, or UE device, etc. Terminal device 102 can also be a cellular phone, cordless phone, session initiation protocol (SIP) phone, wireless local loop (WLL) station, personal digital assistant (PDA), handheld device with wireless communication capabilities, computing device or other processing device connected to a wireless modem, wearable device, terminal device in future communication systems, etc. Terminal device 102 can be fixed or mobile. In some embodiments, terminal device 102 can also be a device with transmission and reception capabilities, such as a chip module. For example, the chip module can include a chip and other discrete devices. The specific technology and specific device form used by terminal device 102 in the embodiments of the disclosure are not limited.

Network device 104 can be a device that provides wireless communication functions for terminal device 102, also known as an access network device or radio access network (RAN) device, etc. For example, network device 104 includes but is not limited to: the next generation base station (gNB) in 5G, evolved node B (eNB), radio network controller (RNC), node B (NB), base station controller (BSC), base transceiver station (BTS), home base station (for example, home evolved node B or home node B, HNB), baseband unit (BBU), transmitting and receiving point (TRP), transmitting point (TP), mobile switching center, etc. In some embodiments, network device 104 can also be a device with wireless communication functions for terminal device 102, such as a chip module. For example, the chip module can include a chip and other discrete devices. The specific technology and specific device form used by network device 104 in the embodiments of the disclosure are not limited.

Secondly, the related concepts involved in the disclosure are described.

Carrier Aggregation (CA)

CA is a technology that increases transmission bandwidth and can meet the requirements of single-user peak rate and system capacity improvement. CA technology can aggregate multiple component carriers (CC) under one base station to achieve a larger transmission bandwidth, thereby effectively improving uplink and downlink transmission rates.

In the CA scenario, a base station can manage several serving cells, with one serving cell acting as the UE's primary cell (PCell), and the remaining serving cells acting as the UE's secondary cells (SCell). The primary cell can be the serving cell for the UE's initial connection establishment, or for RRC connection re-establishment, or the serving cell designated during the handover process. The primary cell is responsible for RRC communication between the base station and the UE. The secondary cell can be added through RRC connection reconfiguration after the initial security activation process to provide additional wireless resources.

CC can also be used to describe serving cells. For convenience of description, the disclosure may refer to serving cells as cells, and "cells" and "serving cells" can be used interchangeable unless otherwise specified.

The CA scenario can support self-carrier scheduling and cross-carrier scheduling.

(1) Self-carrier scheduling

Self-carrier scheduling refers to scheduling the UE to listen to the physical downlink control channel (PDCCH) of its own cell on the PDCCH of that cell. For example, the UE listens to the PDCCH of cell 1 on the PDCCH of cell 1.

(2) Cross-carrier scheduling

Cross-carrier scheduling refers to scheduling the UE to listen to the PDCCH of its own cell on the PDCCH of another cell. For example, the UE listens to the PDCCH of cell 2 (i.e., its own cell) on the PDCCH of cell 1.

Cross-carrier scheduling can be cross-carrier scheduling of a secondary cell or cross-carrier scheduling of a primary cell. Cross-carrier scheduling of a secondary cell refers to scheduling the UE to listen to the PDCCH of a secondary cell on the PDCCH of another cell, with no PDCCH transmission on the secondary cell. Cross-carrier scheduling of a primary cell refers to scheduling the UE to listen to the PDCCH of a primary cell on the PDCCH of another cell, with PDCCH transmission also occurring on the primary cell.

If a UE in a cell is configured with the higher layer parameter CrossCarrierSchedulingConfig, then the value of the carrier indicator field in the DCI corresponds to the value indicated by CrossCarrierSchedulingConfig. For example, if the value of the carrier indicator field is 0, it indicates sub-carrier scheduling; if the value of the carrier indicator field is 1, it indicates cross-carrier scheduling.

(3) Multi-cell scheduling method

The multi-cell scheduling method refers to the base station scheduling the UE to receive or transmit on multiple cells through scheduling signaling (such as DCI), i.e., one DCI is used to schedule multiple cells. In other words, one DCI can indicate the scheduling information of multiple cells. The multi-cell scheduling method can also be called multi-carrier scheduling method, multi-cell scheduling mechanism, or multi-carrier scheduling mechanism, etc. The scheduled cells can be referred to as co-scheduled cells or scheduled cells, etc.

Downlink Control Information (DCI)

For a DCI indicating the scheduling information of one cell, the DCI format can be DCI 0_0, DCI 0_1, DCI 0_2, DCI 1_0, DCI 1_1, or DCI 1_2, etc.

For example, DCI 1_1 includes the following information.

Carrier indicator: 0 or 3 bits.
Identifier for DCI formats: 1 bit.
Bandwidth part indicator: 0, 1, or 2 bits.

Frequency domain resource assignment: if only resource allocation type 0 is configured, then $\left\lceil N_{\mathrm{RB}}^{\mathrm{UL,BWP}} / P \right\rceil$ bits; if only resource allocation type 1 is configured, then $\left\lceil \log_2(N_{\mathrm{RB}}^{\mathrm{UL,BWP}}(N_{\mathrm{RB}}^{\mathrm{UL,BWP}}+1)/2) \right\rceil$ bits; if both types of resource allocation are configured, then $\max\left(\left\lceil \log_2(N_{\mathrm{RB}}^{\mathrm{UL,BWP}}(N_{\mathrm{RB}}^{\mathrm{UL,BWP}}+1)/2) \right\rceil, \left\lceil N_{\mathrm{RB}}^{\mathrm{UL,BWP}} / P \right\rceil\right)+1$ bits;
Time domain resource assignment: 1, 2, 3, or 4 bits.
VRB-to-PRB mapping: 0 or 1 bit.
Physical resource block (PRB) bundling size indicator: 0 or 1 bit.
Rate matching indicator: 0, 1, or 2 bits.
Zero power channel state information reference signal (ZP CSI-RS) trigger: X bits.
Transport block 1:

Modulation and coding scheme: 5 bits.
New data indicator: 1 bit.
Redundancy version: 2 bits.
Transport block 2:

Modulation and coding scheme: 5 bits.
New data indicator: 1 bit.
Redundancy version: 2 bits.
HARQ process number: 4 bits.
Downlink assignment index: 0 or 4 bits.
TPC command for scheduled PUCCH: 2 bits.
PUCCH resource indicator: 2 bits.
PDSCH-to-HARQ _feedback timing indicator: 3 bits.
Antenna ports: 4, 5, or 6 bits.
Transmission configuration indication: 0 bit or 3 bits.
Service request system (SRS) request: 2 bits.
Code block group (CBG) transmission information: 0, 2, 4, 6, or 8 bits.
CBG flushing out information: 0 or 1 bit.
Demodulation reference signal (DMRS) sequence initialization: 0 or 1 bit.

For a DCI indicating the scheduling information of multiple cells, the DCI may include a first field and/or a second field.

For the first field, there can be the following three indication methods.

Method 1, a single first field indicating common information to all co-scheduled cells. For example, Method 1 can refer to Table 1.1 below.

Table 1.1

| DCI codepoint | Value for carrier 1 | Value for carrier 2 |
| --- | --- | --- |
| A | A | A |
| B | B | B |

Method 2, a single first field indicating separate information to each of the co-scheduled cells via joint indication. For example, Method 2 can refer to Table 1.2 below.

Table 1.2

| DCI codepoint | Value for carrier 1 | Value for carrier 2 |
| --- | --- | --- |
| 0 | A | X |
| 1 | B | Y |
| 2 | C | Z |
| 3 | D | W |
| 4 | E | I |
| 5 | F | J |
| 6 | G | K |
| 7 | H | L |

Method 3, a single first field indicating an information to only one of the co-scheduled cells. For example, Method 3 can refer to Table 1.3 below.

Table 1.3

| DCI codepoint | Value for carrier 1 |
| --- | --- |
| 00 | A |
| 01 | B |
| 10 | C |
| 11 | D |

For the second field, there can be the following two indication methods:

Method (1), a separate field for each of the co-scheduled cells.
Method (2), each sub-group comprising one or more co-scheduled cells where a single field is commonly applied to the co-scheduled cells belonging to the same sub-group.

Although there are three indication methods for the first field and two indication methods for the second field, specific schemes for how such methods indicate are not specified. Therefore, the disclosure provides a method for indicating scheduling information and a communication device, clarifying how the above methods indicate. In this way, under the multi-cell scheduling method, the scheduling information of the co-scheduled cells can be accurately indicated, which is conducive to improving the flexibility of scheduling.

Below is a description of the method for indicating scheduling information provided by the embodiments of the disclosure.

Please refer to Figure 2, which is a flowchart of a method for indicating scheduling information provided by the embodiments of the disclosure, and may include but not limited to the following steps.

S201, the network device sends downlink control information (DCI) to the terminal device. Correspondingly, the terminal device receives the DCI. The DCI may include a first field and/or a second field.

The DCI can be used to schedule multiple cells, i.e., to schedule multiple co-scheduled cells. In the embodiment shown in Figure 2, the cell refers to the co-scheduled cell. Optionally, the network device also sends higher layer signaling to the terminal device. Correspondingly, the terminal device receives the higher layer signaling from the network device. The disclosure does not limit the order of sending the higher layer signaling and the DCI.

The higher layer signaling is used to configure co-scheduled cell information, and the co-scheduled cell information is used to indicate which cells are scheduled by the DCI, for example, scheduling CC1 and CC2. In one implementation, the co-scheduled cell information may include a cell identifier of each co-scheduled cell in at least one co-scheduled cell. In another implementation, the co-scheduled cell information may include the serial number of each cell subgroup in at least one group of cell subgroups.

S202, the terminal device determines the scheduling information of each cell among the multiple cells based on the first field and/or the second field.

For Method 1, the indication method of the first field may include the following.

Method 1-1, the terminal device can first determine the length of the first field, and then, the terminal device can determine the scheduling information of the second cell based on the length of the first field and the bit length required by the configuration parameters of the second cell. The second cell can be any one of the multiple cells. That is, the terminal device can determine the scheduling information of each cell based on the length of the first field and the bit length required by the configuration parameters of each cell.

The length of the first field is related to the configuration information of a reference cell. For example, the terminal device can determine the length of the first field based on the configuration information of the reference cell. For example, the configuration information of the reference cell may include the frequency domain resource of the reference cell, and the length of the frequency domain resource of the reference cell can be determined as the length of the first field.

Optionally, in the multi-cell scheduling method, the reference cell can be a scheduling cell among the multiple cells. The scheduling cell can be a cell configured to send multi-cell scheduling PDCCH, for example, the scheduling cell is CC1. Optionally, the reference cell can be a cell designated by the network device, for example, the network device designates CC1 as the reference cell. Optionally, the reference cell can be a cell autonomously selected by the terminal device, and the basis for selection is not limited in the disclosure.

In one implementation, if the length of the first field is greater than the bit length required by the configuration parameters of the second cell, the first field can be processed with high-bit puncturing, and then the scheduling information of the second cell can be determined based on the processed first field. That is, when the length of the first field is greater than the bit length required by the configuration parameters of the second cell, the low bits of the first field can be taken so that the length of the first field is the same as the bit length required by the configuration parameters of the second cell, and then the scheduling information of the second cell can be determined based on the processed first field.

For example, assuming that the first field corresponds to the frequency domain resource allocation field, the bit length required by the configuration parameters of the second cell can be the bit length required by the bandwidth part (BWP) configuration of the second cell. If the length of the first field is 2 bits and the BWP configuration of the second cell requires 1 bit, then the lowest 1 bit of the first field can be taken as the frequency domain resource allocation field of the second cell.

In another implementation, if the length of the first field is less than the bit length required by the configuration parameters of the second cell, any one of the following three methods can be used to determine the scheduling information of the second cell.

① If the length of the first field is less than the bit length required by the configuration parameters of the second cell, the first field can be processed with high-bit zero padding, and the scheduling information of the second cell can be determined based on the processed first field.

For example, assuming that the first field corresponds to the frequency domain resource allocation field, the bit length required by the configuration parameters of the second cell can be the bit length required by the BWP configuration of the second cell. If the length of the first field is 1 bit and the BWP configuration of the second cell requires 2 bits, then 1 bit of zero can be padded before the highest bit of the first field, so that the length of the first field after padding is the same as the bit length required by the BWP configuration of the second cell, and the first field after padding can be used as the frequency domain resource allocation field of the second cell.

② If the length of the first field is less than the bit length required by the configuration parameters of the second cell, the first field can be processed based on the ratio of the bit length required by the configuration parameters of the second cell to the length of the first field, and the scheduling information of the second cell can be determined based on the processed first field. Here, the ratio of the bit length required by the configuration parameters of the second cell to the length of the first field may not be an integer, so the ratio can be processed with rounding to obtain the processed first field. The rounding process can be, for example, floor rounding (floor), ceiling rounding (ceil), or round rounding (round).

For example, assuming that the first field corresponds to the frequency domain resource allocation field, the bit length required by the configuration parameters of the second cell can be the bit length required by the frequency domain resource allocation field of the second cell. If the length of the first field is 5 bits and the first field indicates with 1 resource block (resource block, RB) as a unit, and the frequency domain resource allocation field of the second cell requires 10 bits, then based on the ratio of the bit length required by the frequency domain resource allocation field of the second cell (10 bits) to the length of the first field (5 bits) (i.e., 10/5=2), 2 RBs can be grouped together for joint indication, and the terminal device can determine the frequency domain resource allocation of the second cell based on the indication of the 2 RBs.

③ If the length of the first field is less than the bit length required by the configuration parameters of the second cell, it can be determined that the scheduling information of the second cell is a subset of the reference scheduling information of the second cell. The reference scheduling information of the second cell corresponds to single-cell scheduling, that is, the reference scheduling information of the second cell can be the scheduling information configured by the network device for scheduling the second cell alone. For example, assuming that the reference scheduling information of the second cell is configured with eight parameter values, i.e., the bit length required by the configuration parameters of the second cell is 3 bits, if the length of the first field is only 2 bits, then the scheduling information of the second cell can be four of the eight parameter values with the lowest index, or evenly spaced four parameter values, or any four parameter values.

Method 1-2, the length of the first field can be predefined by the protocol. Or, the length of the first field can be configured by a first higher layer signaling. That is, the length of the first field can be a fixed value. The value of the first field is used to determine the scheduling information of each cell among the multiple cells. Then, the terminal device can determine the scheduling information of each cell among the multiple cells based on the value of the first field.

In one implementation, the network device can configure or the protocol can predefine the correspondence between the value of the first field and the scheduling information of the multiple cells, so that the terminal device can determine the scheduling information of each cell among the multiple cells based on this correspondence and the value of the first field.

For example, taking the first field as the time domain resource allocation field, in the multi-cell scheduling method, the network device can configure a time domain resource allocation table within each cell's BWP. In this time domain resource allocation table, it can include the time domain resources corresponding to different values of the first field. Optionally, the network device can add a parameter (for example, parameter pdsch-TimeDomainAllocationListDCI-1-X-r-18) in each cell's configuration parameters to indicate the value of the first field. Assuming that the multiple cells currently scheduled include CC1 and CC2, the time domain resource allocation table configured within the BWP of CC1 is shown in Table 1, and the time domain resource allocation table configured within the BWP of CC2 is shown in Table 2. If the value of the first field is "0", then the time domain resource of CC1 corresponds to the row in Table 1 where the value of the first field is "0", i.e., corresponding to PDSCH mapping type "Type A", slot offset "0", S starting position as "0", and L length "14"; the time domain resource of CC2 corresponds to the row in Table 2 where the value of the first field is "0", i.e., corresponding to PDSCH mapping type "Type A", slot offset as "1", S starting position "0", and L length "14".

Table 1: Time domain resource allocation table configured within the BWP of CC1

| Value of the first field | PDSCH mapping type | Slot offset | S starting position | L length |
|---|---|---|---|---|
| 0 | Type A | 0 | 0 | 14 |
| 1 | Type A | 0 | 0 | 12 |
| 2 | Type B | 0 | 2 | 12 |
| 3 | Type B | 0 | 2 | 10 |
| 4 | Type B | 0 | 4 | 10 |
| 5 | Type B | 0 | 4 | 8 |
| 6 | Type A | 0 | 0 | 7 |
| 7 | Type B | 0 | 7 | 7 |

Table 2: Time domain resource allocation table configured within the BWP of CC2

| Value of the first field | PDSCH mapping type | Slot offset | S starting position | L length |
|---|---|---|---|---|
| 0 | Type A | 1 | 0 | 14 |
| 1 | Type A | 1 | 0 | 12 |
| 2 | Type A | 2 | 0 | 14 |
| 3 | Type A | 2 | 0 | 12 |
| 4 | Type A | 3 | 0 | 14 |
| 5 | Type A | 3 | 0 | 12 |
| 6 | Type A | 4 | 0 | 14 |
| 7 | Type A | 4 | 0 | 12 |

For Method 2, the length of the first field can be predefined by the protocol. Or, the length of the first field can be configured by a first higher layer signaling. That is, the length of the first field can be a fixed value. The terminal device can determine the scheduling information of each cell among the multiple cells based on the value of the first field and preset information.

The preset information can be a preset table configured by the network device for the terminal device specifically for multi-cell scheduling, and the preset table can include the correspondence between the value of the first field and the scheduling information of all cells that the terminal device can schedule.

In one implementation, the value of the first field can indicate the index value of each cell among the multiple cells, and the terminal device can determine the scheduling information of each cell among the multiple cells based on the index value of each cell and the configuration information of each cell among the multiple cells. For example, taking the time domain resource allocation as an example, assuming that the cells that the terminal device can schedule include CC1, CC2, CC3, and CC4, Table 3 is a preset table for multi-cell scheduling configured by the network device for the terminal device. If the value of the first field is "000", then it corresponds to the index value 0 of CC1 (i.e., Index 0), and this index value can correspond to the time domain resource indicated by the row in the original time domain resource allocation table of CC1 (i.e., the configuration information of CC1) with an index value 0. That is, based on this index value, the time domain resource corresponding to CC1 can be found from the original time domain resource allocation table of CC1. Here, the original time domain resource allocation table can be understood as the time domain resource allocation table configured by the network device for single-cell scheduling, i.e., the time domain resource allocation table when scheduling CC1 alone. Similarly, the indication value of the time domain resource allocation corresponding to the first field "000" corresponds to index value 3 of CC2 (i.e., Index 3), index value 4 of CC3 (i.e., Index 4), and index value 5 of CC4 (i.e., Index 5). Based on the index values of CC2, CC3, and CC4, the time domain resources corresponding to CC2, CC3, and CC4 can be respectively found from the original time domain resource allocation tables (i.e., the configuration information) of CC2, CC3, and CC4.

Table 3: Preset table for multi-cell scheduling

| Value of the first field | CC1 | CC2 | CC3 | CC4 |
|---|---|---|---|---|
| 000 | Index 0 | Index 3 | Index 4 | Index 5 |
| 001 | Index 2 | Index 6 | Index 7 | Index 1 |
| 010 | Index 6 | Index 4 | Index 8 | Index 0 |
| 011 | Index 5 | Index 3 | Index 10 | Index 2 |

For Method 3, the terminal device can only schedule one cell, and the value of the first field can be directly used to indicate the scheduling information of that cell.

For example, assuming that the terminal device schedules CC1, Table 4 is a schematic table of the relationship between the value of the first field and the scheduling information of CC1. If the first field is "00", then the corresponding scheduling information of CC1 is "A"; if the first field is "01", the corresponding scheduling information of CC1 is "B"; if the first field is "10", then the corresponding scheduling information of CC1 is "C"; if the first field is "11", then the corresponding scheduling information of CC1 is "D".

Table 4: Schematic table of the relationship between the first field and the scheduling information of CC1

| First field | Scheduling information of CC1 |
| --- | --- |
| 00 | A |
| 01 | B |
| 10 | C |
| 11 | D |

For Method (1), the second field may include multiple concatenated bit units, and a single bit-unit can be used to indicate the scheduling information of the cell corresponding to the bit unit. Then, the terminal device can determine the scheduling information of the third cell based on the second field. The third cell can be any one of the multiple cells.

Optionally, in the multi-cell scheduling method, the position of each cell's corresponding bit unit in the second field can be fixed. Each cell can be configured with a cell identifier (for example, the cell identifier of CC1 is 1), and the position of each cell's corresponding bit unit in the second field can be consistent with the sorting position of the cell identifier. For example, the position of the bit unit corresponding to CC1 in the second field can be fixed as the first position.

In one implementation, the terminal device can find the position of the bit unit corresponding to the third cell in the second field based on the cell identifier of the third cell, and then determine the scheduling information of the third cell. For example, assuming that the cells that the terminal device can schedule include CC1, CC2, CC3, and CC4, Table 5 is a schematic table of the relationship between the second field and the scheduling information of multiple cells. If the second field is "1101", scheduling CC2 and CC3, and the third cell is CC2, the position of CC2 in the multiple cells is fixed as the second position, then the scheduling information of the third cell corresponds to the second bit unit "1" in the second field "1101". Here, for the unscheduled CC1 and CC4, the terminal device can add padding fields, or can add fixed values, or can also ignore them.

Table 5: Schematic table of the relationship between the second field and the scheduling information of multiple cells

| Second field | Scheduling information of CC1 | Scheduling information of CC2 | Scheduling information of CC3 | Scheduling information of CC4 |
| --- | --- | --- | --- | --- |
| 0100 | padding | 1 | 0 | padding |
| 1100 | padding | 1 | padding | 0 |

Optionally, in the multi-cell scheduling method, the position of each cell's corresponding bit unit in the second field can be variable. It can be understood that the position of each cell's corresponding bit unit in the second field can be determined based on the number of cells currently scheduled and the position of each cell in the multiple cells. The position of each cell in the multiple cells can be the position sorted by cell identifier. For example, if two cells CC2 and CC3 are currently scheduled, the position of the bit unit corresponding to CC2 in the second field is the first position, and the position of the bit unit corresponding to CC3 in the second field is the second position. The position of each cell in the multiple cells can also be the position designated by the network device, and the network device can configure a cell combination table (for example, Table 7), in which different values of the indication field can correspond to different cell combination orders. For example, if the value of the indication field is "011", the corresponding cell combination order is CC0, CC1, and CC3, then the position of the bit unit corresponding to CC0 in the second field is the first position, the position of the bit unit corresponding to CC1 in the second field is the second position, and the position of the bit unit corresponding to CC3 in the second field is the third position.

In one implementation, the terminal device can find the position of the bit unit corresponding to the third cell in the second field based on the number of cells currently scheduled and the position of the third cell in the multiple cells, and then determine the scheduling information of the third cell. For example, assuming that the cells that the terminal device can schedule include CC1, CC2, CC3, and CC4, Table 6 is another schematic table of the relationship between the second field and the scheduling information of multiple cells. If the second field is "0101", and the current scheduled cells are CC2 and CC3, and the third cell is CC2, the position of CC2 in the two currently scheduled cells is the first position, then the scheduling information of the third cell corresponds to the first bit unit "0" in the second field "0101".

Table 6: Another schematic table of the relationship between the second field and the scheduling information of multiple cells

| Second field | Scheduling information of CC1 | Scheduling information of CC2 | Scheduling information of CC3 | Scheduling information of CC4 |
|---|---|---|---|---|
| 0100 | padding | 0 | 1 | padding |
| 1100 | padding | 1 | padding | 1 |

Optionally, in the process of determining the position of each cell's corresponding bit unit in the second field, the terminal device can receive a second higher layer signaling sent by the network device. The second higher layer signaling can configure the cell identifier of each cell among the multiple cells, or the second higher layer signaling can configure a cell combination table. In the cell combination table, different values of the indication field can correspond to different cell combination orders, and the indication field can be, for example, a CIF field, as shown in Table 7, which is a schematic table of cell combinations.

Table 7: Schematic table of cell combinations

| CIF Value | To-be-scheduled cell 1 | To-be-scheduled cell 2 | To-be-scheduled cell 3 | To-be-scheduled cell 4 |
|---|---|---|---|---|
| 000 | CC0 | | | CC3 |
| 001 | | CC1 | | CC3 |
| 010 | | | CC2 | CC3 |
| 011 | CC0 | CC1 | | CC3 |
| 100 | CC0 | CC1 | CC2 | |
| 101 | | CC1 | CC2 | |
| 110 | CC0 | CC1 | CC2 | CC3 |
| 111 | CC0 | | CC2 | CC3 |

For example, it can be seen from Table 7 that if the value of the CIF field is "000", it indicates scheduling two cells CC0 and CC3.

For Method (2), the second field may include multiple concatenated bit units, and a single bit-unit can be used to indicate the scheduling information of the cell subgroup corresponding to the bit unit. Then, the terminal device can determine the scheduling information of the first cell subgroup based on the second field. The first cell subgroup can be any one of the multiple cell subgroups corresponding to the multiple cells.

Optionally, in the multi-cell scheduling method, the position of each cell subgroup's corresponding bit unit in the second field can be fixed. Each cell subgroup can be configured with a serial number (for example, the serial number of cell subgroup 1 is 1), and the position of each cell subgroup's corresponding bit unit in the second field can be consistent with the sorting position of each cell subgroup's serial number. For example, the position of the bit unit corresponding to cell subgroup 1 in the second field can be fixed as the first position.

In one implementation, the terminal device can find the position of the bit unit corresponding to the first cell subgroup in the second field based on the serial number of the first cell subgroup, and then determine the scheduling information of the first cell subgroup. For example, assuming that the cell subgroups that the terminal device can schedule include cell subgroup 1 and cell subgroup 2, where cell subgroup 1 includes CC1 and CC2, and cell subgroup 2 includes CC3 and CC4, Table 8 is a schematic table of the relationship between the second field and the scheduling information of multiple cell subgroups. If the second field is "AB", then the scheduling information of cell subgroup 1 corresponds to the first bit unit "A" in the second field "AB", and the scheduling information of cell subgroup 2 corresponds to the second bit unit "B" in the second field "AB".

Table 8: Schematic table of the relationship between the second field and the scheduling information of multiple cells

| Second field | Cell subgroup 1 | | Cell subgroup 2 | |
|---|---|---|---|---|
| | CC1 | CC2 | CC3 | CC4 |
| AB | A | A | B | B |
| BC | B | B | C | C |

(continued)

| | Cell subgroup 1 | | Cell subgroup 2 | |
|---|---|---|---|---|
| Second field | CC1 | CC2 | CC3 | CC4 |
| CD | C | C | D | D |
| DA | D | D | A | A |

Optionally, in the multi-cell scheduling method, the position of each cell subgroup's corresponding bit unit in the second field can be variable. It can be understood that the position of each cell subgroup's corresponding bit unit in the second field can be determined based on the number of cell subgroups currently scheduled and the serial number of the cell subgroup. For example, if two cell subgroups, cell subgroup 2 and cell subgroup 3, are currently scheduled, the position of the bit unit corresponding to cell subgroup 2 in the second field is the first position, and the position of the bit unit corresponding to cell subgroup 3 in the second field is the second position.

In one implementation, the terminal device can find the position of the bit unit corresponding to the first cell subgroup in the second field based on the number of cell subgroups currently scheduled and the serial number of the first cell subgroup, and then determine the scheduling information of the first cell subgroup. For example, assuming that the second field is "ABC", and two cell subgroups are currently scheduled, cell subgroup 2 and cell subgroup 3, and the first cell subgroup is cell subgroup 3, the position of cell subgroup 3 in the two currently scheduled cell subgroups is the second position, then the scheduling information of the first cell subgroup corresponds to the second bit unit "B" in the second field "ABC".

Optionally, in the process of determining the position of each cell subgroup's corresponding bit unit in the second field, the terminal device can receive a third higher layer signaling sent by the network device. The third higher layer signaling can configure the serial number of each cell subgroup among the multiple cell subgroups.

In the embodiment shown in Figure 2, a DCI can contain the scheduling information of one cell, or it can contain the scheduling information of multiple cells. In the multi-cell scheduling method, the scheduling information of each cell can be accurately indicated based on the first field and/or the second field in the DCI. In this way, on the one hand, it is conducive to saving communication resources and reducing the bit overhead of DCI, and on the other hand, it is conducive to improving the reliability and flexibility of PDCCH transmission.

As an optional embodiment, in the multi-cell scheduling method, the correspondence between the fields of the DCI format and the several methods for the first field and the two methods for the second field can refer to the following Table 9.

Table 9

| Fields | Multi-cell scheduling DCI | | DCI format 1_1 | | | DCI format 1_2 |
|---|---|---|---|---|---|---|
| Identifier for DCI formats | fixed | Method 1 | fixed | 1 bit | fixed | 1 bit |
| Carrier indicator or/and Indicator of co-scheduled cells | fixed | Method1 | Per cell | 0 or 3 bit | Per cell | 0, 1, 2 or 3 bits<br><br>carrierIndicatorSizeDCI-1-2-r16 configure bit number |
| Bandwidth part indicator | per cell combination | Method1 /Method 2 | Per cell | 0, 1 or 2 bits | Per cell | Same with DCI 1_1 |
| Frequency domain resource assignment | Per BWP | Method1 | Per BWP | RA type 0 and RA type 1 with size depending on the active BWP | Per BWP | resourceAllocationDCI-1-2-r16<br>Support Rel-15 RA type 0<br>Support RA type 1 in which multiple PRBs are a group:<br><br>resourceAllocationType1 Granularit yDCI-1-2-r16={2, 4, 8, 16}, not configured as 1 |

(continued)

| Fields | Multi-cell scheduling DCI | | DCI format 1_1 | | | DCI format 1_2 |
|---|---|---|---|---|---|---|
| | | | | | | $\lceil \log_2(N_{RBG,K2}(N_{RBG,K2}+1)/2) \rceil$ bits <br><br> $N_{RBG,K2} = \lceil (N_{RB}^{DL,BWP}(N_{DL,BWP}^{star} \bmod K2)/K2 \rceil$ <br><br> $\lceil \log_2(N_{RBG,K2}(N_{RBG,K2}+1)/2) \rceil$ <br><br> Support dynamic switching between RA type0 and type 1, indicated by MSB <br><br> $\max(\lceil \log_2(N_{RBG,K2}(N_{RBG,K2}+1)/2), N_{RBG} \rceil)+1$ |
| Time domain resource assignment | Per cell & Per BWP | Method 2 | Per BWP | 0 or 1 or 2 or 3 or 4 bits | Per BWP | New parameter pdsch-TimeDomainAllocationListDCI-1-2-r16, configured TDRA table, otherwise, a table configured by old parameter will be used <br> If referenceOfSLIVDCI-1-2-r16enable: <br> K0=0, start from PDCCH starting symbol; <br> K0>0, start from slot boundary |

For example, the BWP indication field in Table 9 can be indicated by Method 1 or Method 2 for the first field.

Please refer to Figure 3, which is a structural diagram of a communication device provided by the embodiments of the disclosure. As shown in Figure 3, the communication device 30 includes a communication unit 301 and a processing unit 302.

In one implementation, the communication device 30 is a terminal device or a device matching the terminal device.

The communication unit 301 is configured to receive DCI, the DCI is used to schedule multiple cells, and the DCI includes a first field and/or a second field.

The processing unit 302 is configured to determine the scheduling information of each cell among the multiple cells based on the first field and/or the second field; where the length and/or the value of the first field are used to determine the scheduling information of each cell among the multiple cells; or the first field and preset information are used to determine the scheduling information of each cell among the multiple cells; or the first field is used to indicate the scheduling information of a first cell, and the first cell belongs to the multiple cells; the second field includes multiple concatenated bit units, a single bit-unit is used to indicate the scheduling information of the cell corresponding to the bit unit, and the cell corresponding to the bit unit belongs to the multiple cells; or the second field includes multiple concatenated bit units, a single bit-unit is used to indicate the scheduling information of a cell subgroup corresponding to the bit unit, and the cell subgroup corresponding to the bit unit belongs to the multiple cells.

Optionally, the length of the first field is related to the configuration information of a reference cell, and the processing unit 302 is also configured to determine the scheduling information of a second cell based on the length of the first field and the bit length required by the configuration parameters of the second cell, the second cell is any one of the multiple cells.

Optionally, the processing unit 302 is also used to perform a high-bit puncturing process on the first field if the length of the first field is greater than the bit length required by the configuration parameters of the second cell, and determine the scheduling information of the second cell based on the processed first field.

Optionally, the processing unit 302 is also used to perform a high-bit zero padding process on the first field if the length of the first field is less than the bit length required by the configuration parameters of the second cell, and determine the scheduling information of the second cell based on the processed first field; or, if the length of the first field is less than the bit length required by the configuration parameters of the second cell, process the first field based on the ratio of the bit length required by the configuration parameters of the second cell to the length of the first field, and determine the scheduling information of the second cell based on the processed first field; or, if the length of the first field is less than the bit length required by the configuration parameters of the second cell, determine the scheduling information of the second cell as a subset of the reference scheduling information of the second cell, the reference scheduling information of the second cell corresponding to single-cell scheduling.

Optionally, the length of the first field is configured by a first higher layer signaling or predefined by a protocol, and the value of the first field is used to determine the scheduling information of each cell among the multiple cells.

Optionally, the length of the first field is configured by a first higher layer signaling or predefined by a protocol, and the value of the first field and preset information are used to determine the scheduling information of each cell among the multiple cells.

Optionally, the value of the first field indicates the index value of each cell among the multiple cells; the processing unit 302 is also configured to determine the scheduling information of each cell among the multiple cells based on the index value of each cell among the multiple cells and the configuration information of each cell among the multiple cells.

Optionally, the second field includes multiple concatenated bit units, a single bit-unit being used to indicate the scheduling information of the cell corresponding to the bit unit; the position of the bit unit corresponding to a third cell in the second field is fixed or variable; the third cell is any one of the multiple cells.

Optionally, the position of the bit unit corresponding to the third cell in the second field is the same as the position of the third cell among the multiple cells, and the position of the third cell among the multiple cells is configured by a second higher layer signaling.

Optionally, the second field includes multiple concatenated bit units, a single bit-unit is used to indicate the scheduling information of a cell subgroup corresponding to the bit unit, the position of the bit unit corresponding to a first cell subgroup in the second field is fixed or variable; the first cell subgroup is any one of the multiple cell subgroups corresponding to the multiple cells.

Optionally, the position of the bit unit corresponding to the first cell subgroup in the second field is related to the serial number of the first cell subgroup, and the serial number of the first cell subgroup is configured by a third higher layer signaling.

Optionally, the communication unit 301 is also configured to receive a third higher layer signaling, the third higher layer signaling configures multiple cell subgroups for multi-cell scheduling, and the third higher layer signaling includes the serial number of each cell subgroup among the multiple cell subgroups.

In another implementation, the communication device 30 is a network device or a device matching the network device.

The communication unit 301 is further configured to send DCI, the DCI is used to schedule multiple cells, and the DCI includes a first field and/or a second field; where the length and/or the value of the first field are used to determine the scheduling information of each cell among the multiple cells; or the first field and preset information are used to determine the scheduling information of each cell among the multiple cells; or the first field is used to indicate the scheduling information of a first cell, and the first cell belongs to the multiple cells; the second field includes multiple concatenated bit units, a single bit-unit is used to indicate the scheduling information of the cell corresponding to the bit unit, and the cell corresponding to the bit unit belongs to the multiple cells; or the second field includes multiple concatenated bit units, a single bit-unit is used to indicate the scheduling information of a cell subgroup corresponding to the bit unit, and the cell subgroup corresponding to the bit unit belongs to the multiple cells.

Optionally, the length of the first field is related to the configuration information of a reference cell.

Optionally, the length of the first field is configured by a first higher layer signaling or predefined by a protocol, and the value of the first field is used to determine the scheduling information of each cell among the multiple cells.

Optionally, the length of the first field is configured by a first higher layer signaling or predefined by a protocol, and the value of the first field and preset information are used to determine the scheduling information of each cell among the multiple cells.

Optionally, the second field includes multiple concatenated bit units, a single bit-unit is used to indicate the scheduling information of the cell corresponding to the bit unit; the position of the bit unit corresponding to a third cell in the second field is fixed or variable; the third cell is any one of the multiple cells.

Optionally, the position of the bit unit corresponding to the third cell in the second field is the same as the position of the third cell among the multiple cells, and the position of the third cell among the multiple cells is configured by a second higher layer signaling.

Optionally, the second field includes multiple concatenated bit units, a single bit-unit is used to indicate the scheduling information of a cell subgroup corresponding to the bit unit, the position of the bit unit corresponding to a first cell subgroup in the second field is fixed or variable; the first cell subgroup is any one of the multiple cell subgroups corresponding to the multiple cells.

Optionally, the position of the bit unit corresponding to the first cell subgroup in the second field is related to the serial number of the first cell subgroup, and the serial number of the first cell subgroup is configured by a third higher layer signaling.

Optionally, the communication unit 301 is also configured to send a third higher layer signaling, the third higher layer signaling configures multiple cell subgroups for multi-cell scheduling, and the third higher layer signaling includes the serial number of each cell subgroup among the multiple cell subgroups.

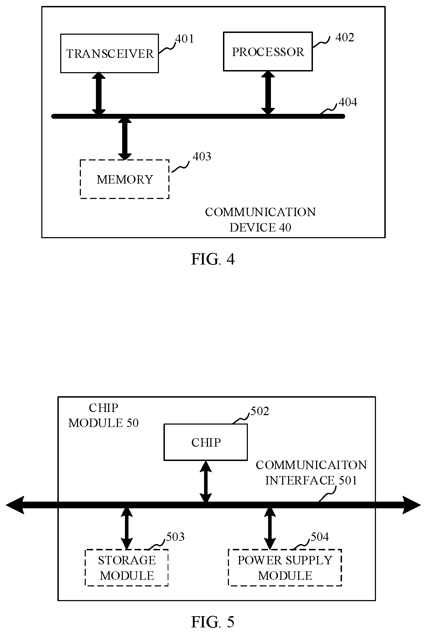

Please refer to Figure 4, which is another communication device provided by the embodiments of the disclosure. The communication device 40 can include a transceiver 401 and a processor 402. Optionally, the communication device can also include a memory 403. The transceiver 401, processor 402, and memory 403 can be connected through a bus 404 or other means. The bus is represented by a thick line in Figure 4, and the connection between other components is only for illustrative purposes and is not limited. The bus can be an address bus, a data bus, a control bus, etc. For convenience of representation, Figure 4 only uses a thick line to represent the bus, but it does not mean that there is only one bus or one type of bus.

The coupling in the embodiments of the disclosure is an indirect coupling or communication connection between devices, units, or modules, which can be electrical, mechanical, or other forms, used for information interaction between devices, units, or modules. The specific connection medium between the transceiver 401, processor 402, and memory 403 in the embodiments of the disclosure is not limited.

The memory 403 can include read-only memory and random access memory, and provide instructions and data to the processor 402. A part of the memory 403 can also include non-volatile random access memory.

The processor 402 can be a central processing unit (CPU), and the processor 402 can also be other general-purpose processors, digital signal processors (DSP), application-specific integrated circuits (ASIC), field-programmable gate arrays (FPGA), or other programmable logic devices, discrete gates or transistor logic devices, discrete hardware components, etc. General-purpose processors can be microprocessors, optionally, the processor 402 can also be any conventional processor, etc.

In one optional implementation, the memory 403 is used to store program instructions; the processor 402 is used to call the program instructions stored in the memory 403 to execute the steps performed by the terminal device in the embodiment corresponding to Figure 2.

In another optional implementation, the memory 403 is used to store program instructions; the processor 402 is used to call the program instructions stored in the memory 403 to execute the steps performed by the network device in the embodiment corresponding to Figure 2.

In the embodiments of the disclosure, the method provided by the embodiments of the disclosure can be realized by running a computer program (including program code) that can execute the steps involved in the above method on a general computing device such as a computer that includes processing elements and storage elements such as a CPU, random access memory (RAM), and read-only memory (ROM), and the computer program can be recorded on a computer-readable recording medium, and loaded into the above computing device through the computer-readable recording medium, and run in it.

Based on the same inventive concept, the principle and beneficial effects of the communication device 40 provided in the embodiments of the disclosure to solve the problem are similar to the principle and beneficial effects of solving the problem in the embodiment shown in Figure 2 of the disclosure, and can refer to the principle and beneficial effects of the method implementation, for the sake of concise description, it will not be repeated here.

The aforementioned communication device can be, for example: a chip, or a chip module.

The embodiments of the disclosure also provide a chip, in one implementation, the chip can execute the steps related to the terminal device in the method embodiment mentioned above. The chip is used for: receiving DCI, the DCI is used to schedule multiple cells, and the DCI includes a first field and/or a second field; determining the scheduling information of each cell among the multiple cells based on the first field and/or the second field; where the length and/or the value of the first field are used to determine the scheduling information of each cell among the multiple cells; or the first field and preset information are used to determine the scheduling information of each cell among the multiple cells; or the first field is used to indicate the scheduling information of a first cell, and the first cell belongs to the multiple cells; the second field includes multiple concatenated bit units, a single bit-unit is used to indicate the scheduling information of the cell corresponding to the bit unit, and the cell corresponding to the bit unit belongs to the multiple cells; or the second field includes multiple concatenated bit units, a single bit-unit is used to indicate the scheduling information of a cell subgroup corresponding to the bit unit, and the cell subgroup corresponding to the bit unit belongs to the multiple cells.

Optionally, the length of the first field is related to the configuration information of a reference cell, and the chip can also be used for: determining the scheduling information of a second cell based on the length of the first field and the bit length required by the configuration parameters of the second cell, the second cell is any one of the multiple cells.

Optionally, the chip can also be used for: performing a high-bit puncturing process on the first field if the length of the first field is greater than the bit length required by the configuration parameters of the second cell, and determining the scheduling information of the second cell based on the processed first field.

Optionally, the chip can also be used for: performing a high-bit zero padding process on the first field if the length of the first field is less than the bit length required by the configuration parameters of the second cell, and determining the scheduling information of the second cell based on the processed first field; or, if the length of the first field is less than the bit length required by the configuration parameters of the second cell, processing the first field based on the ratio of the bit length required by the configuration parameters of the second cell to the length of the first field, and determining the scheduling information of the second cell based on the processed first field; or, if the length of the first field is less than the bit length required by the configuration parameters of the second cell, determining the scheduling information of the second cell as a subset of the reference scheduling information of the second cell, the reference scheduling information of the second cell corresponds to single-cell scheduling.

Optionally, the length of the first field is configured by a first higher layer signaling or predefined by a protocol, and the value of the first field is used to determine the scheduling information of each cell among the multiple cells.

Optionally, the length of the first field is configured by a first higher layer signaling or predefined by a protocol, and the value of the first field and preset information are used to determine the scheduling information of each cell among the multiple cells.

Optionally, the value of the first field indicates the index value of each cell among the multiple cells; the chip can also be used for: determining the scheduling information of each cell among the multiple cells based on the index value of each cell and the configuration information of each cell among the multiple cells.

Optionally, the second field includes multiple concatenated bit units, a single bit-unit is used to indicate the scheduling information of the cell corresponding to the bit unit; the position of the bit unit corresponding to a third cell in the second field is fixed or variable; the third cell is any one of the multiple cells.

Optionally, the position of the bit unit corresponding to the third cell in the second field is the same as the position of the third cell among the multiple cells, and the position of the third cell among the multiple cells is configured by a second higher layer signaling.

Optionally, the second field includes multiple concatenated bit units, a single bit-unit is used to indicate the scheduling information of a cell subgroup corresponding to the bit unit, the position of the bit unit corresponding to a first cell subgroup in the second field is fixed or variable; the first cell subgroup is any one of the multiple cell subgroups corresponding to the multiple cells.

Optionally, the position of the bit unit corresponding to the first cell subgroup in the second field is related to the serial number of the first cell subgroup, and the serial number of the first cell subgroup is configured by a third higher layer signaling.

Optionally, the chip can also be used for: receiving a third higher layer signaling, the third higher layer signaling configures multiple cell subgroups for multi-cell scheduling, and the third higher layer signaling includes the serial number of each cell subgroup among the multiple cell subgroups.

In another implementation, the chip can execute the steps related to the network device in the method embodiment mentioned above. The chip is used for: sending DCI, the DCI is used to schedule multiple cells, and the DCI includes a first field and/or a second field; where the length and/or the value of the first field are used to determine the scheduling information of each cell among the multiple cells; or the first field and preset information are used to determine the scheduling information of each cell among the multiple cells; or the first field is used to indicate the scheduling information of a first cell, and the first cell belongs to the multiple cells; the second field includes multiple concatenated bit units, a single bit-unit is used to indicate the scheduling information of the cell corresponding to the bit unit, and the cell corresponding to the bit unit belongs to the multiple cells; or the second field includes multiple concatenated bit units, a single bit-unit is used to indicate the scheduling information of a cell subgroup corresponding to the bit unit, and the cell subgroup corresponding to the bit unit belongs to the multiple cells.

Optionally, the length of the first field is related to the configuration information of a reference cell.

Optionally, the length of the first field is configured by a first higher layer signaling or predefined by a protocol, and the value of the first field is used to determine the scheduling information of each cell among the multiple cells.

Optionally, the length of the first field is configured by a first higher layer signaling or predefined by a protocol, and the value of the first field and preset information are used to determine the scheduling information of each cell among the multiple cells.

Optionally, the second field includes multiple concatenated bit units, a single bit-unit is used to indicate the scheduling information of the cell corresponding to the bit unit; the position of the bit unit corresponding to a third cell in the second field is fixed or variable; the third cell is any one of the multiple cells.

Optionally, the position of the bit unit corresponding to the third cell in the second field is the same as the position of the third cell among the multiple cells, and the position of the third cell among the multiple cells is configured by a second higher layer signaling.

Optionally, the second field includes multiple concatenated bit units, a single bit-unit is used to indicate the scheduling information of a cell subgroup corresponding to the bit unit, the position of the bit unit corresponding to a first cell subgroup in the second field is fixed or variable; the first cell subgroup is any one of the multiple cell subgroups corresponding to the multiple cells.

Optionally, the position of the bit unit corresponding to the first cell subgroup in the second field is related to the number of the first cell subgroup, and the number of the first cell subgroup is configured by a third higher layer signaling.

Optionally, the chip can also be used for: sending a third higher layer signaling, the third higher layer signaling configures multiple cell subgroups for multi-cell scheduling, and the third higher layer signaling includes the serial number of each cell subgroup among the multiple cell subgroups.

Please refer to Figure 5, which is a structural diagram of a chip module provided by the embodiments of the disclosure. The chip module 50 can execute the steps related to the communication device 30 in the method embodiment mentioned above, and the chip module 50 includes: a communication interface 501 and a chip 502.

The communication interface is configured for internal communication of the chip module, or for communication between the chip module and external devices; the chip is configured to implement the functions of the communication device in the embodiments of the disclosure, for details, see the embodiments corresponding to Figures 2-5. Optionally, the chip module 50 can also include a storage module 503 and a power module 504. The storage module 503 is configured to store data and instructions. The power module 504 is configured to provide power to the chip module.

For the various devices and products applied to or integrated into the chip module, the various modules contained can all be implemented in hardware by circuits, etc., different modules can be located in the same component (such as a chip, circuit module, etc.) or different components of the chip module, or at least part of the modules can be implemented in software programs, the software programs run on the processor integrated inside the chip module, and the remaining (if any) part of the modules can be implemented in hardware by circuits, etc.

The embodiments of the disclosure also provide a computer-readable storage medium, which stores computer-readable instructions, and when the computer-readable instructions are executed, they implement the method provided by the method embodiment mentioned above.

The embodiments of the disclosure also provide a computer program or computer program product, including code or instructions, and when the code or instructions are executed on a computer, they cause the computer to execute the method provided by the method embodiment mentioned above.

Regarding the various devices and products described in the aforementioned embodiments, the various modules/units contained can be software modules/units, hardware modules/units, or some can be software modules/units and some can be hardware modules/units. For example, for the various devices and products applied to or integrated into the chip, the various modules/units contained can all be implemented in hardware by circuits, etc., or at least part of the modules/units can be implemented in software programs, the software programs run on the processor integrated inside the chip, and the remaining (if any) part of the modules/units can be implemented in hardware by circuits, etc.; for the various devices and products applied to or integrated into the chip module, the various modules/units contained can all be implemented in hardware by circuits, etc., different modules/units can be located in the same component (such as a chip, circuit module, etc.) or different components of the chip module, or at least part of the modules/units can be implemented in software programs, the software programs run on the processor integrated inside the chip module, and the remaining (if any) part of the modules/units can be implemented in hardware by circuits, etc.; for the various devices and products applied to or integrated into the terminal, the various modules/units contained can all be implemented in hardware by circuits, etc., different modules/units can be located in the same component (such as a chip, circuit module, etc.) or different components of the terminal, or at least part of the modules/units can be implemented in software programs, the software programs run on the processor integrated inside the terminal, and the remaining (if any) part of the modules/units can be implemented in hardware by circuits, etc.

It should be noted that for the various method embodiments described above, in order to simplify the description, they are all expressed as a series of action combinations, but those skilled in the art should know that the disclosure is not limited by the described order of actions, because according to the disclosure, some steps can be performed in other orders or simultaneously. Secondly, those skilled in the art should also know that the embodiments described in the specification are all preferred embodiments, and the actions and modules involved do not necessarily have to be included in the disclosure.

The steps in the method embodiment of the disclosure can be adjusted in order, merged, and reduced according to actual needs.

The modules in the device embodiment of the disclosure can be merged, divided, and reduced according to actual needs.

Ordinary technical personnel in the field can understand that all or part of the steps in the various methods described above can be completed by instructing related hardware through a program, and the program can be stored in a computer-readable storage medium, and the readable storage medium can include: flash memory, ROM, RAM, magnetic disk or optical disk, etc.

The above-mentioned is only one of the better embodiments of the disclosure, and it is only a part of the embodiments of the disclosure, and it cannot be used to limit the scope of rights of the disclosure.

**Claims**

1. A method for indicating scheduling information, comprising:

receiving downlink control information (DCI), the DCI being used to schedule a plurality of cells, the DCI comprises a first field and/or a second field;
determining scheduling information of each cell among the plurality of cells based on the first field and/or the second field;

wherein a length and/or a value of the first field are used to determine the scheduling information of each cell among the plurality of cells; or, the first field and preset information are used to determine the scheduling information of each cell among the plurality of cells; or, the first field is used to indicate scheduling information of a first cell, the first cell belonging to the plurality of cells;

wherein the second field comprises multiple concatenated bit units, a single bit-unit being used to indicate scheduling information of a cell corresponding to the bit unit, the cell corresponding to the bit unit belonging to the plurality of cells; or, the second field comprises multiple concatenated bit units, a single bit-unit being used to indicate scheduling information of a cell subgroup corresponding to the bit unit, the cell subgroup corresponding to the bit unit belonging to the plurality of cells.

2. The method according to claim 1, wherein the length of the first field is related to configuration information of a reference cell;

determining the scheduling information of each cell among the plurality of cells based on the first field comprises:

determining scheduling information of a second cell based on the length of the first field and a bit length required by configuration parameters of the second cell, the second cell being any one of the plurality of cells.

3. The method according to claim 2, wherein determining the scheduling information of the second cell based on the length of the first field and the bit length required by the configuration parameters of the second cell comprises:

in response to the length of the first field being greater than the bit length required by the configuration parameters of the second cell, performing a high-bit puncturing process on the first field, and determining the scheduling information of the second cell based on the processed first field.

4. The method according to claim 2, wherein determining the scheduling information of the second cell based on the length of the first field and the bit length required by the configuration parameters of the second cell comprises:

in response to the length of the first field being less than the bit length required by the configuration parameters of the second cell, performing a high-bit zero padding process on the first field, and determining the scheduling information of the second cell based on the processed first field; or

in response to the length of the first field being less than the bit length required by the configuration parameters of the second cell, processing the first field based on a ratio of the bit length required by the configuration parameters of the second cell to the length of the first field, and determining the scheduling information of the second cell based on the processed first field; or

in response to the length of the first field being less than the bit length required by the configuration parameters of the second cell, determining the scheduling information of the second cell as a subset of reference scheduling information of the second cell, the reference scheduling information of the second cell corresponding to single-cell scheduling.

5. The method according to claim 1, wherein the length of the first field is configured by a first higher layer signaling or predefined by a protocol, and the value of the first field is used to determine the scheduling information of each cell among the plurality of cells.

6. The method according to claim 1, wherein the length of the first field is configured by a first higher layer signaling or predefined by a protocol, and the value of the first field and preset information are used to determine scheduling information of each cell among the plurality of cells.

7. The method according to claim **1,** wherein determining the scheduling information of each cell among the plurality of cells based on the first field comprises:

the value of the first field indicates an index value of each cell among the plurality of cells;

determining the scheduling information of each cell among the plurality of cells based on the index value of each cell among the plurality of cells and the configuration information of each cell among the plurality of cells.

8. The method according to claim 1, wherein the second field comprises multiple concatenated bit units, a single bit-unit being used to indicate scheduling information of a cell corresponding to the bit unit; a position of a bit unit corresponding to a third cell in the second field is fixed or variable; the third cell being any one of the plurality of cells.

9. The method according to claim 8, wherein a position of a bit unit corresponding to the third cell in the second field is the same as a position of the third cell in the plurality of cells, and the position of the third cell in the plurality of cells is configured by a second higher layer signaling.

10. The method according to claim 1, wherein the second field comprises multiple concatenated bit units, a single bit-unit being used to indicate scheduling information of a cell subgroup corresponding to the bit unit, a position of a bit unit corresponding to a first cell subgroup in the second field is fixed or variable; the first cell subgroup being any one of multiple cell subgroups corresponding to the plurality of cells.

11. The method according to claim 10, wherein the position of the bit unit corresponding to the first cell subgroup in the second field is related to a serial number of the first cell subgroup, and the serial number of the first cell subgroup is configured by a third higher layer signaling.

12. The method according to claim 11, wherein the method further comprises:
receiving the third higher layer signaling, the third higher layer signaling configuring the multiple cell subgroups for multi-cell scheduling, and the third higher layer signaling containing the serial number of each cell subgroup among the multiple cell subgroups.

13. A method for indicating scheduling information, comprising:

sending downlink control information (DCI), the DCI being used to schedule plurality of cells, and the DCI comprising a first field and/or a second field;
wherein a length and/or a value of the first field are used to determine the scheduling information of each cell among the plurality of cells; or, the first field and preset information are used to determine the scheduling information of each cell among the plurality of cells; or, the first field is used to indicate scheduling information of a first cell, the first cell belonging to the plurality of cells;
wherein the second field comprises multiple concatenated bit units, a single bit-unit being used to indicate scheduling information of a cell corresponding to the bit unit, the cell corresponding to the bit unit belonging to the plurality of cells; or, the second field comprises multiple concatenated bit units, a single bit-unit being used to indicate scheduling information of a cell subgroup corresponding to the bit unit, the cell subgroup corresponding to the bit unit belonging to the plurality of cells.

14. The method according to claim 13, wherein the length of the first field is related to configuration information of a reference cell.

15. The method according to claim 13, wherein the length of the first field is configured by a first higher layer signaling or predefined by a protocol, and the value of the first field is used to determine the scheduling information of each cell among the plurality of cells.

16. The method according to claim 13, wherein the length of the first field is configured by a first higher layer signaling or predefined by a protocol, and the value of the first field and preset information are used to determine scheduling information of each cell among the plurality of cells.

17. The method according to claim 13, wherein the second field comprises multiple concatenated bit units, a single bit-unit being used to indicate scheduling information of a cell corresponding to the bit unit; a position of a bit unit corresponding to a third cell in the second field is fixed or variable; the third cell being any one of the plurality of cells.

18. The method according to claim 17, wherein a position of a bit unit corresponding to the third cell in the second field is the same as a position of the third cell in the plurality of cells, and the position of the third cell in the plurality of cells is configured by a second higher layer signaling.

19. The method according to claim 13, wherein the second field comprises multiple concatenated bit units, a single bit-unit being used to indicate scheduling information of a cell subgroup corresponding to the bit unit, a position of a bit unit corresponding to a first cell subgroup in the second field is fixed or variable; the first cell subgroup being any one of multiple cell subgroups corresponding to the plurality of cells.

20. The method according to claim 19, wherein the position of the bit unit corresponding to the first cell subgroup in the second field is related to a serial number of the first cell subgroup, and the serial number of the first cell subgroup is configured by a third higher layer signaling.

21. The method according to claim 20, wherein the method further comprises:
sending the third higher layer signaling, the third higher layer signaling configuring the multiple cell subgroups for multi-cell scheduling, and the third higher layer signaling containing the serial number of each cell subgroup among the multiple cell subgroups.

22. A communication device, comprising:

a communication unit, configured to receive downlink control information (DCI), the DCI being used to schedule a plurality of cells, and the DCI comprising a first field and/or a second field;
a processing unit, configured to determine scheduling information of each cell among the plurality of cells based on the first field and/or the second field;
wherein a length and/or a value of the first field are used to determine the scheduling information of each cell among the plurality of cells; or, the first field and preset information are used to determine the scheduling information of each cell among the plurality of cells; or, the first field is used to indicate scheduling information of a first cell, the first cell belonging to the plurality of cells;
wherein the second field comprises multiple concatenated bit units, a single bit-unit being used to indicate scheduling information of a cell corresponding to the bit unit, the cell corresponding to the bit unit belonging to the plurality of cells; or, the second field comprises multiple concatenated bit units, a single bit-unit being used to indicate scheduling information of a cell subgroup corresponding to the bit unit, the cell subgroup corresponding to the bit unit belonging to the plurality of cells.

23. A communication device, comprising:

a communication unit, configured to send downlink control information (DCI), the DCI being used to schedule a plurality of cells, and the DCI comprising a first field and/or a second field;
wherein a length and/or a value of the first field are used to determine the scheduling information of each cell among the plurality of cells; or, the first field and preset information are used to determine the scheduling information of each cell among the plurality of cells; or, the first field is used to indicate scheduling information of a first cell, the first cell belonging to the plurality of cells;
wherein the second field comprises multiple concatenated bit units, a single bit-unit being used to indicate scheduling information of a cell corresponding to the bit unit, the cell corresponding to the bit unit belonging to the plurality of cells; or, the second field comprises multiple concatenated bit units, a single bit-unit being used to indicate scheduling information of a cell subgroup corresponding to the bit unit, the cell subgroup corresponding to the bit unit belonging to the plurality of cells.

24. A communication device, comprising a processor, a memory, and a computer program or instruction stored in the memory, wherein the processor is configured to execute the computer program or instruction to implement steps of the method according to any one of claims 1-12, or to implement steps of the method according to any one of claims 13-21.

25. A chip, comprising a processor, wherein the processor is configured to execute steps of the method according to any one of claims 1-12, or execute steps of the method according to any one of claims 13-21.

26. A chip module, comprising a communication module, a power module, a storage module, and a chip, wherein the power module is configured to provide power to the chip module; the storage module is configured to store data and instructions; the communication module is configured for internal communication of the chip module, or for communication between the chip module and external devices; the chip is configured to execute steps of the method according to any one of claims 1-12, or execute steps of the method according to any one of claims 13-21.

27. A computer-readable storage medium, storing a computer program or instruction which, when executed, implements steps of the method according to any one of claims 1-12, or implements steps of the method according to any one of claims 13-21.

TERMINAL
DEVICE

NETWORK
DEVICE

FIG. 1

TERMINAL
DEVICE

NETWORK
DEVICE

S201, DCI (FIRST FIELD
AND/OR SECOND FIELD)

S202, DETERMINE SCHEDULING
INFORMATION OF EACH CELL IN
MULTIPLE CELLS ACCORDING TO
FIRST FIELD AND/OR SECOND
FIELD

FIG. 2

COMMUNICATION
DEVICE 30

301

302

COMMUNICATION
UNIT

PROCESSING
UNIT

FIG. 3

FIG. 4

FIG. 5

# INTERNATIONAL SEARCH REPORT

| International application No. |
|---|
| **PCT/CN2023/108698** |

| **A.** | **CLASSIFICATION OF SUBJECT MATTER** |
|---|---|

H04W72/04(2023.01)i; H04W72/232(2023.01)i

According to International Patent Classification (IPC) or to both national classification and IPC

| **B.** | **FIELDS SEARCHED** |
|---|---|

Minimum documentation searched (classification system followed by classification symbols)

IPC: H04W, H04L

Documentation searched other than minimum documentation to the extent that such documents are included in the fields searched

Electronic data base consulted during the international search (name of data base and, where practicable, search terms used)

CNTXT; VEN; ENTXT; CNKI; 3GPP: 下行控制, DCI, 多, 小区, cell?, 字段, field, 比特, bit?, 子组, sub-group, 共调度, co-scheduled

| **C.** | **DOCUMENTS CONSIDERED TO BE RELEVANT** | |
|---|---|---|

| Category* | Citation of document, with indication, where appropriate, of the relevant passages | Relevant to claim No. |
|---|---|---|
| X | SAMSUNG. "R1-2203925 "Multi-cell PUSCH/PDSCH scheduling with a single DCI"" *3GPP tsg_ran\wg1_rl1*, No. tsgr1_109-e, 29 April 2022 (2022-04-29), sections 2-8 | 1-27 |
| X | CN 111245586 A (BEIJING UNISOC COMMUNICATION TECHNOLOGY CO., LTD.) 05 June 2020 (2020-06-05) description, paragraphs 131-242 | 1-27 |
| X | US 2021258999 A1 (QUALCOMM INC.) 19 August 2021 (2021-08-19) description, paragraphs 27-252 | 1-27 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **25 October 2023** | **02 November 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/108698**

| Patent document cited in search report | | | Publication date (day/month/year) | Patent family member(s) | | | Publication date (day/month/year) |
|---|---|---|---|---|---|---|---|
| CN | 111245586 | A | 05 June 2020 | US | 2022353851 | A1 | 03 November 2022 |
| | | | | WO | 2021139825 | A1 | 15 July 2021 |
| | | | | EP | 4089948 | A1 | 16 November 2022 |
| US | 2021258999 | A1 | 19 August 2021 | US | 11564247 | B2 | 24 January 2023 |
| | | | | EP | 4104604 | A1 | 21 December 2022 |
| | | | | WO | 2021162858 | A1 | 19 August 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202210868407